# EUROPEAN PATENT APPLICATION

(11) **EP 4 160 544 A1**
(43) Date of publication of application: **05.04.2023**
(21) Application number: 20902484.3
(22) Date of filing: 09.12.2020
(51) Int. Cl.: G06T 17/00, G06Q 50/06

(54) **THREE-DIMENSIONAL MODEL APPLICATION METHOD AND SYSTEM FOR NUCLEAR POWER ENGINEERING MODULAR CONSTRUCTION**

(30) Priority: 02.01.2020 CN 202010001552
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: GONG, Xiaocheng, Shenzhen, Guangdong 518124 (CN); XU, Xinwei, Shenzhen, Guangdong 518124 (CN); HU, Jiakun, Shenzhen, Guangdong 518124 (CN); ZHANG, Yu, Shenzhen, Guangdong 518124 (CN); HE, Xiaofen, Shenzhen, Guangdong 518124 (CN); JIN, Xianjing, Shenzhen, Guangdong 518124 (CN)
(74) Representative: Greaves Brewster LLP
(86) International application number: PCT/CN2020/134937
(87) International publication number: WO 2021/121098

(57) **Abstract**

A three-dimensional model application method and system for the modular construction of nuclear power engineering. The three-dimensional model application method comprises: establishing a plurality of modular three-dimensional models for nuclear power stations; extracting each technical document from each modular three-dimensional model for nuclear power stations, and generating the procurement data, construction data and commissioning data of each modular three-dimensional models for each nuclear power station according to the technical documents; performing lightweight construction on a plurality of modular three-dimensional models for nuclear power stations and generating a plurality of lightweight three-dimensional module models; and establishing the corresponding relationship between a plurality of lightweight three-dimensional module models and the procurement data, construction data and commissioning data. By using the three-dimensional module models as the core, the method realizes monitoring management for the business process of nuclear power engineering and the fine and dynamic management for the project progress and materials management.

## Description

### Technical Field

The present invention relates to the nuclear power engineering or construction field, and in particular to a three-dimensional model application method and system for modular construction of nuclear power engineering.

### Background

Adopting the modular construction technology is one of the effective ways for nuclear power stations to shorten the construction periods and reduce costs. It is one of the important features of the development of nuclear power engineering construction technology. The application of modules has more than 20 years history in China, with the first use in the dome steel lining construction technology for nuclear island stations. Modular technology is to integrate design, procurement with construction, research work must be carried out based on a three-dimensional (3D) design platform, and the close coordination among design, procurement and construction also needs supports from corresponding data platforms. Based on the actual needs of project engineering, the research work adopts 3D model informatization application mode of modular technology, the building work is carried out based on the effective screening and extraction of activity process data from design, procurement, construction, commissioning and other business segments, so as to realize whole process and full range of fine management for special process modules by data integration and 3D technology application, therefore, it is more and more important and meaningful to research and develop a set of comprehensive data platform to ensure each business segment to share data in time, and achieve the collaborative design and management.

At present, digital modular construction design based on BIM platform is mostly adopted in China to be used in the design of buildings and ships. From the design, construction and operation of buildings to the end of their whole life cycle, all kinds of data are always integrated in a 3D model database. The design team, construction unit, facility operation department and the owner may coordinate their work based on BIM to effectively improve work efficiency, save resources, reduce costs and achieve sustainable development. The core of the BIM technology is to establish a virtual 3D model of architectural engineering, and use digital technology to provide a complete construction engineering database which is consistent with the actual situations for this model. However, the current international and domestic mainstream approach is to perform data linking and collaboration; a unique database in model visualization and business process, and a complete modular construction technology database have not been formed. There are a lot of differences between such approach and the domestic general modeling, process and management styles. In this way, direct use of the prior art cannot meet the requirements of modular construction technology for nuclear power stations.

Therefore, it is urgent to provide a 3D model application method and system for modular construction of nuclear power engineering to solve the technical problem that the prior art cannot meet the technical requirements of modular construction for nuclear power stations.

### Summary

In order to solve the technical problem that the prior art cannot meet the technical requirements of modular construction for nuclear power stations, the present invention provides a 3D model application method and system for modular construction of nuclear power engineering.

The present invention adopts the following technical solution to solve the technical problem. The present invention provides a 3D model application method for modular construction of nuclear power engineering, comprising: a modular 3D model for nuclear power stations; technical documents extracted from the modular 3D model for nuclear power stations, and the procurement data and construction data generated according to the technical documents; lightweight construction of the modular 3D model for nuclear power stations and the lightweight 3D module model generated; the corresponding relationship established between the lightweight 3D module model and the procurement data and construction data for the 3D visualization display of the lightweight 3D module model, procurement data and construction data.

In the 3D model application method of the present invention, the lightweight construction of the modular 3D model for nuclear power stations and the generation of lightweight 3D module model comprise: setting the configuration files of the lightweight 3D module model; reading the configuration files of the lightweight 3D module model through the interface program of the Plant Design Management System; exporting the RVM file and attribute data of the modular 3D model for nuclear power stations; converting RVM files into NWD files through the interface program of the Plant Design Management System, and exporting the NWD file and related attribute data to the database.

In the 3D model application method of the present invention, the lightweight 3D module model configuration files comprise the import frequency and scope, import method, import deployment, import execution and model organization.

In the 3D model application method of the present invention, the database has a specific storage structure.

In the 3D model application method of the present invention, the 3D visualization display process for the lightweight 3D module model, procurement data and construction data is that: the Navisworks plugin is integrated into a web page to generate the operation interface, which comprises the model tree menu on the left, the

3D model display area in the middle, and the model attributes display area on the right; the NWD files and attribute data are loaded by clicking the model tree menu on the left; the procurement data corresponding to the lightweight 3D module model are loaded, the lightweight 3D module model are displayed in the 3D model display area in the middle; and the attribute data, procurement data, construction data and commissioning data are displayed in the model attribute area on the right.

The present invention also provides a 3D model application system for modular construction of nuclear power engineering, which comprises: a modeling module used to establish a 3D modular model for nuclear power stations; a data generation module which is connected with the modeling module and used to extract technical documents from the modular 3D model for nuclear power stations, and generate procurement data and construction data according to the technical documents; a lightweight modeling module which is connected with the modeling module for lightweight construction of the modular 3D model for nuclear power stations and generation of the lightweight 3D module model; a relationship building module which is connected with the data generation module and lightweight modeling module and used to establish the corresponding relationship between the lightweight 3D module model and the procurement data and construction data; a 3D visualization module which is connected with the relationship building module and used for 3D visualization display of the lightweight 3D module model, procurement data and construction data.

In the 3D model application method of the present invention, the lightweight modeling module comprises: a configuration files module which is used to set configuration files of the lightweight 3D module model; the configuration files reading module which is connected with the configuration files module and used to read the lightweight 3D module model configuration files through the interface program of the Plant Design Management System; the module data export module which is connected with the modeling module and the configuration files reading module, and this module is used to export the RVM file and attribute data of the modular 3D model for nuclear power stations; the module data storage module which is connected with the module data export module and used to convert RVM files into NWD files through the interface program of the Plant Design Management System, and export the NWD format files and related attribute data to the database.

In the 3D model application method of the present invention, configuration files of the lightweight 3D module model comprise the import frequency and range, import way, import deployment, import execution and model organization.

In the 3D model application method of the present invention, the database has a specific storage structure.

In the 3D model application method of the present invention, the 3D visualization module comprises: the operation interface generation module which is connected with the relationship building module and used for integrating the Navisworks plugin into a web page to generate the operation interface which comprises the model tree menu on the left, the 3D model display area in the middle, and the model attributes display area on the right; the data loading module which is connected with the operation interface generation module and used to load NWD format files and attribute data by clicking the model tree menu on the left; the data loading module which is connected with the model loading module for loading the procurement data, construction data and commissioning data corresponding to the lightweight 3D module model; the model data display module which is connected with the data loading module for displaying the lightweight 3D module model in the 3D model display area in the middle, and the attribute data and procurement data, construction data and commissioning data in the model attribute area on the right.

The beneficial effects of the technical scheme provided in the embodiments of the present invention are that: in view of the technical problems that the prior art cannot satisfy the station modular construction technical requirements, the present invention puts forward a 3D model application method and system for modular construction of nuclear power engineering; by taking the 3D model as the core, and the module construction approach as the index, the design, procurement, construction participants of nuclear power engineering become closely linked from upstream to downstream, and the data integration display of advanced construction technology of nuclear power engineering is realized, and the unified and shared data of upstream and downstream construction and management of nuclear power engineering, as well as the rapid response processing of interfaces are ensured. In addition, the whole process and full range of fine and dynamic management for special process of nuclear power design modularity are realized through the screening, extraction and integration of the activity process data of module design, procurement, construction, commissioning and other business segments, and the integration of 3D model, business process and operation plan presentation technologies of modules.

### Brief Description of Drawings

In order to state more clearly the technical scheme in the embodiments of the present invention, brief descriptions of the figures used for the embodiments are provided as below. Clearly, the Figures below are just some of the embodiments of the present invention, the common technical personnel in this field may obtain other figures based on them on the premise of not giving creative labor.
FIG. 1 is the processing chart of a 3D model application method used for modular construction of nuclear power engineering provided in Embodiment 1 of the present invention;
FIG. 2 is the whole schematic diagram of the 3D model application method used for modular construction of nuclear power engineering provided in Embodiment 1 of the present invention;
FIG. 3 is the processing chart of the Step S3 provided in Embodiment 1 of the present invention;
FIG. 4 is the structural schematic diagram of the database storage of the 3D model application method used for modular construction of nuclear power engineering provided in Embodiment 1 of the present invention;
FIG. 5 is the schematic diagram of building the lightweight 3D module model of the 3D model application method used for modular construction of nuclear power engineering provided in Embodiment 1 of the present invention;
FIG. 6 is the processing chart of the Step S5 provided in Embodiment 1 of the present invention;
FIG. 7 is the schematic diagram of the operation interface of the 3D model application method used for modular construction of nuclear power engineering provided in Embodiment 1 of the present invention;
FIG. 8 is the schematic diagram of the functional modules of the 3D model application system used for modular construction of nuclear power engineering provided in Embodiment 2 of the present invention;
FIG. 9 is the modules building schematic diagram of the lightweight model of the 3D model application system used for modular construction of nuclear power engineering provided in Embodiment 2 of the present invention;
FIG. 10 is the schematic diagram of the 3D visualization module of the 3D model application system used for modular construction of nuclear power engineering provided in Embodiment 2 of the present invention.

### Description of Embodiments

The object of the present invention is to solve the existing technical problem that the prior art cannot meet the technical requirements of the modular construction for nuclear power stations. The present invention provides a 3D model application method and system used for modular construction of nuclear power engineering, its core idea is to closely link the design, procurement, construction participants of nuclear power engineering from upstream to downstream, realize the data integration display of advanced construction technology of nuclear power engineering by taking the 3D model as the core, and the module construction approach as the index, and ensure to unify and share data on upstream and downstream construction and management of nuclear power engineering, as well as the rapid response processing of interfaces. In addition, the whole process and full range of fine and dynamic management for special process of nuclear power design modularity are realized through the screening, extraction and integration of the activity process data of module design, procurement, construction, commissioning, and other business segments, and the integration of 3D model, business process and operation plan presentation technologies of modules.

To describe more clearly the purpose, technical scheme and advantages of the present invention, the embodiments of the present invention will be further described in details combining the attached figures.

### Embodiment 1

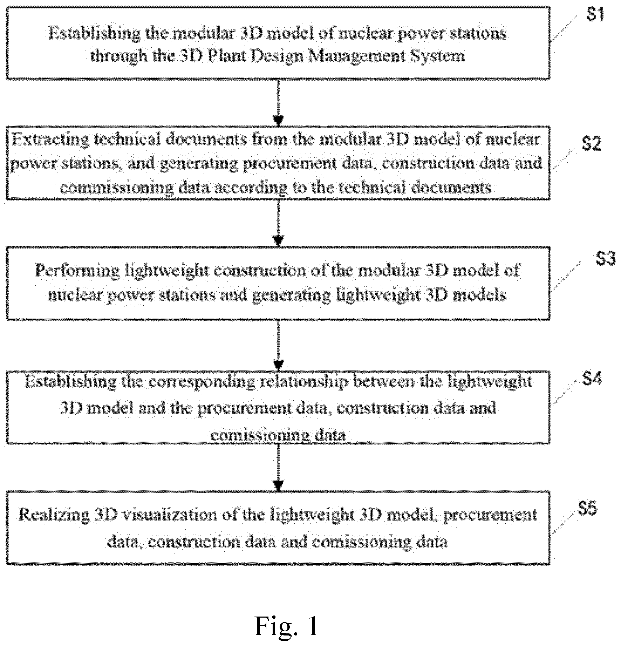

The embodiment of the present invention provides a 3D model application method used for modular construction of nuclear power engineering, as shown in FIG. 1, which comprise the following steps:
Step S 1: establishing a plurality of modular 3D model for nuclear power stations through the 3D Plant Design Management System; the "3D model" refers to the virtual 3D plant model established on the plant design software platform; in the present invention, the short name of the Plant Design Management System is PDMS, when the modular 3D models for nuclear power stations are designed by PDMS, the modules are the combinations with particular structural functions or installation materials, and being able to be transported, lifted and brought in independently; modules of nuclear power plants have structural modules and mechanical modules; for structural modules, the civil engineering rooms, floorslabs, walls or steel structural modules pre-built in the plant are transported to the site for installation and assembly by large cranes once for all; for mechanical modules, materials within one zone, including equipment (such as tanks, pumps, heat exchangers, draught fans, air conditioners, and filters), pipes, valves, wind pipes, cable trays, instruments and supporting and hanging brackets, are set in the commonly used permanent steel structural framework collectively, and prefabricated into one unit by a plant or on the site; the establishment process of the modular 3D model for nuclear power stations is that: modular model hierarchy is established in the PDMS according to the modular list; module zones are selected generally, that is the module zones are confirmed; modules are defined, that is what subjects (pipes, wind pipes, cable trays, and others) are included in each module, and child nodes are established under the module nodes, data on subjects of modules are saved; 3D design for subjects in the modules are carried out, including cutting of pipes at the edge of the modules, and brackets design and other work; the full and detailed design for the modules are carried out, including the steel platform design of the whole module used for supporting, center and weight calculation of the lifting installation modules, and others; finally available modular 3D model is formed;
Step S2: extracting each technical document from each modular 3D model for nuclear power stations, and generating the procurement data, construction data and commissioning data of each modular 3D model for nuclear power stations according to the technical document; the technical documents comprise the technical documents of modules, list of equipment and materials, calculation sheet of modules, design drawings of modules, general implementation plan and scheme of modules, procurement planning and technical documents, construction planning and technical documents, commissioning planning and technical documents of non-module parts, and others;
Step S3: lightweight construction of a plurality of modular 3D models for nuclear power stations and generating a plurality of lightweight 3D module models; through the lightweight construction of the modular 3D models for nuclear power stations, the sizes of the modular 3D models can be reduced and the unnecessary attributes can be filtered out, which is convenient for storage and display;
Step S4: establishing the corresponding relationship between a plurality of lightweight 3D module models and the procurement data and construction data; specifically, modules are taken as the unit of lightweight 3D module models and the business unit of procurement and construction work; the corresponding relationship among lightweight 3D module models, procurement data and construction data is established according to names of modules; for example, by loading the module name MK119-NB, the model and the corresponding procurement data and construction data of the module can be viewed;
Step S5: 3D visualization of a plurality of lightweight 3D module models, procurement data and construction data, which provides convenience for operators to observe directly each lightweight 3D module model, and its procurement process and construction process, closely links the nuclear power engineering design, procurement, manufacturing, building participants from upstream to downstream, realizes the data integration display of advanced construction technology of nuclear power engineering, and ensures to unify and share data of upstream and downstream construction and management of nuclear power engineering, as well as the rapid response processing of interfaces.

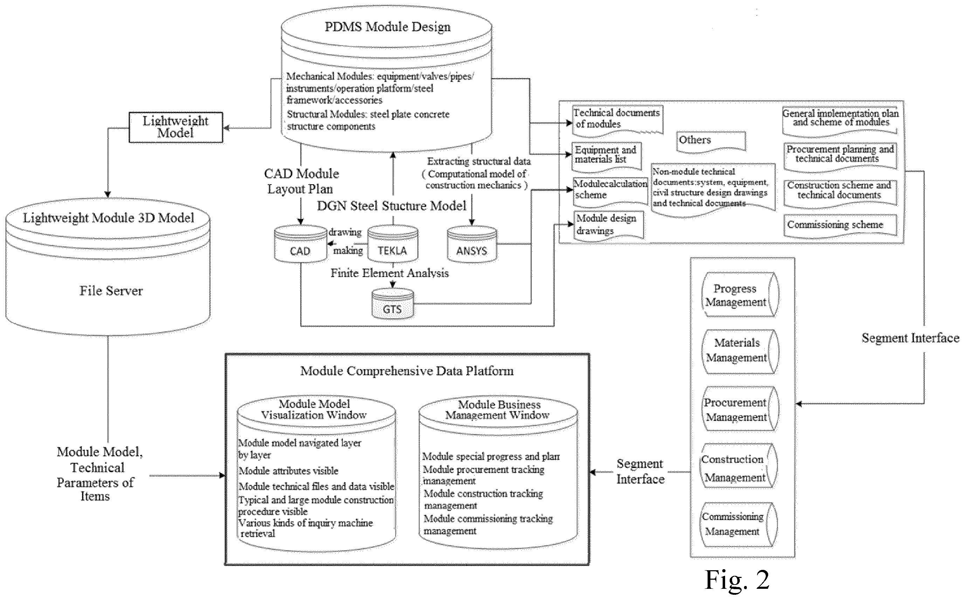

The details are shown in FIG. 2. In the design of PDMS module, a modular 3D model for nuclear power stations is established and related technical documents of the module are generated and produced. According to the module model, the CAD module layout drawing can be generated, the steel structure model in DGN format can be exported and displayed in TEKLA software (the steel structure of the module is mainly designed in TEKLA software, and then imported to PDMS as the reference for design of the module), and the structure data of the module can be extracted for the mechanical calculation of the module structure in ANSYS software. Customized data will be provided in the CAD module layout drawing and TEKLA steel structure drawing, and then the "Module Design Drawing" will be produced; TEKLA steel structure model calls finite element analysis interface GTS and ANSYS module mechanical calculation results to produce the "Module Calculation Sheet", PDMS design platform directly produces "Technical Documents of Module" and "List of Equipment and Materials". These technical documents of modules, and other technical documents, such as the overall planning scheme for module implementation, procurement planning plan and technical documents, construction plan and technical documents, and commissioning planning, are imported into the corresponding management system of the business segment by calling the correct database interface, such as schedule management, materials management, procurement management, construction management, commissioning management. After data processing of these business systems, more specific and detailed data for module progress, materials, procurement, construction and commissioning is formed, and then the data of the module is transmitted to the module comprehensive data platform through the data interface of the business segment. At the same time, the lightweight 3D module model and technical parameters of the items are generated by lightweight construction of 3D module model for nuclear power stations, the lightweight 3D module model integrated data platform organizes and integrates reasonably the data on the model and the corresponding other business segments of the module to form the achievement carrier of the modular construction of the 3D model application method in the present invention. The module comprehensive data platform comprises a module visualization window and a module business management window which are respectively used to display the lightweight 3D module model, attribute data, procurement data, construction data and commissioning data; further, in the module business management window, the module related progress, procurement data, construction data, and commissioning data can be managed (such as data synchronization management, data maintenance, Gantt chart display of progress plan, and others) to form a perfect module comprehensive data display. The module comprehensive data platform is used to dynamically display the lightweight 3D module model, procurement data, construction data and commissioning data. Preferably, different models can be colored to show the design status of the lightweight 3D module model when the lightweight 3D module model is displayed. The present invention is carried out in view of the collaboration between the 3D model data visualization and the modular data; based on 3D design results, taking 3D module model as the unit, the present invention realizes the real-time display of the 3D module model and the related design data, procurement data, construction data and commissioning data, and browsing of technical documents; at the same time, the present invention realizes monitoring management for the business process of nuclear power engineering and the fine and dynamic management for the project progress and materials management based on the module design status indicated by the specific colors of the 3D modules.

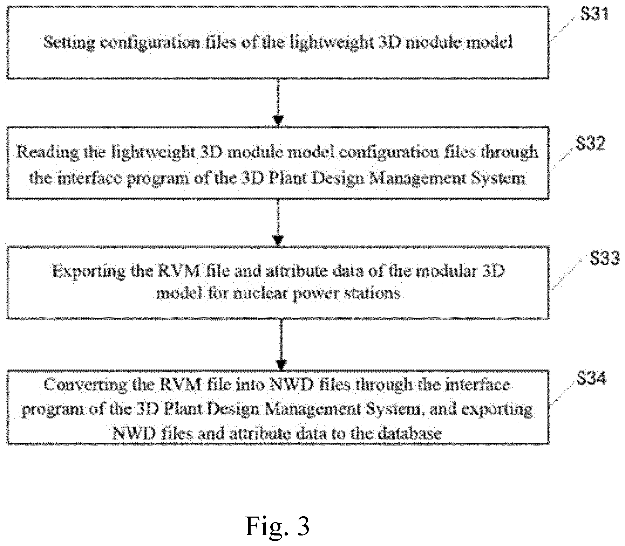

Further, as shown in FIG. 3, the Step S3 comprises:
Step S31: setting configuration files of the lightweight 3D module model; of which, the configuration files comprise the import frequency and scope, import way, import deployment, import execution and model organization; the import frequency can be once a week or once a day; the import scope can be limited to the import of a specific module, or a mechanical module or a structural module of a plant, or the module model of the whole plant, or the module model of the whole project; the import way can be set according to the module display requirements of the module comprehensive data management platform, and the module comprehensive data management platform can be imported regularly from the backend without user intervention; the import deployment refers to the deployment of the import program to the server where the model file is stored; the import execution is specifically operated as following: the WINDOWS task plan is set according to the import frequency, then the import program is called, and the module model is periodically updated to the module comprehensive data management platform; the model organization is stored in the designated database according to the division principle of different plants, module types and module categories.
Step S32: reading the lightweight 3D module model configuration files through the interface program of the 3D Plant Design Management System; the interface program can be C# structure program; and the 3D Plant Design Management System can be started by TTY (no interface login mode), the login is convenient and fast;
Step S33: exporting the RVM file and attribute data of each modular 3D model for nuclear power stations;
Step S34: converting RVM files into NWD files through the interface program of the 3D Plant Design Management System, and exporting NWD files and related attribute data to the file server; of which, there is a specific storage structure for file storage.

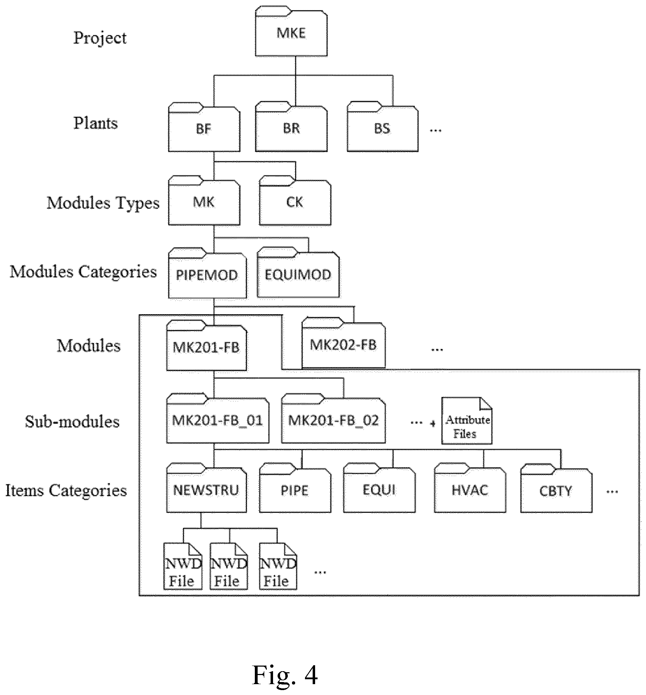

As shown in FIG. 4, the file storage structure comprises: project code (MKE); plant code (BFBR/BS and others); module type (MK mechanical module, CK structure module); module category (PIPEMOD pipeline module, EQUIMOD device module); module name (MK201-FB); sub-module name (MK201-FB_01) + attribute file; this kind of storage structure can ensure the names of the specific items (PIPE for pipes, EQUI for equipment, HVAC for ducts, CBTY for cable trays, and so on) under the child modules to match the modular 3D model hierarchy of nuclear power engineering, realize the on-demand loading (loading as a whole or part) of the corresponding layer module model according to the structure of the model files storage, and display the module model.

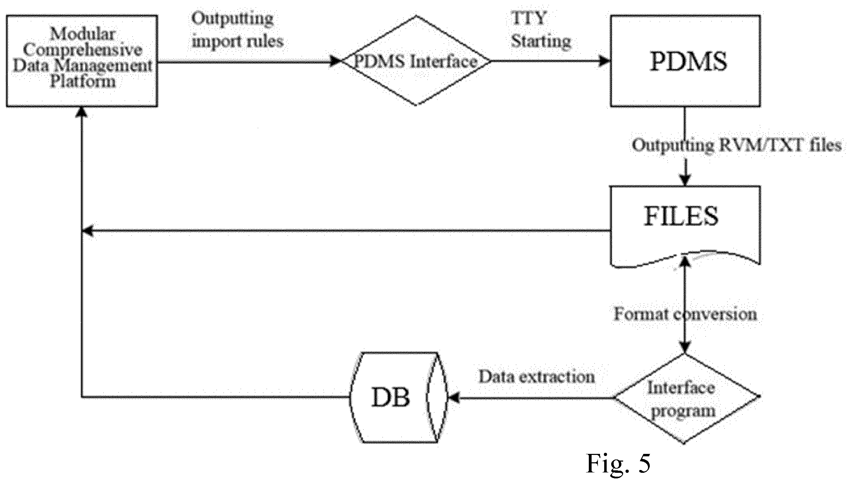

Further, as shown in FIG. 5, the specific process of the lightweight construction of the modular 3D model for nuclear power stations in the present invention comprises: configuring the module model lightweight configuration files according to the synchronization update frequency requirements for model display of the module data platform; firstly, reading the module model lightweight configuration files through the PDMS interface program; secondly, starting the PDMS by using the TIY way (PDMS no interface login way), and exporting the RVM file and attribute data of the related module model to TXT files; thirdly, converting the model file format through the PDMS interface program, and extracting the related attribute data and the module file after format conversion to the database. It should be noted that the PDMS module model is constantly updated with the design, and the model needs to be updated regularly to the modular comprehensive data management platform according to the lightweight construction frequency. The FILES contain RVM files and TXT files. The RVM files are converted format to replace the existing RVM files, and these files are read when the platform displays the model. TXT files are attribute files and are updated to the database. Real-time update can be realized by setting the lightweight frequency to ensure accurate data.

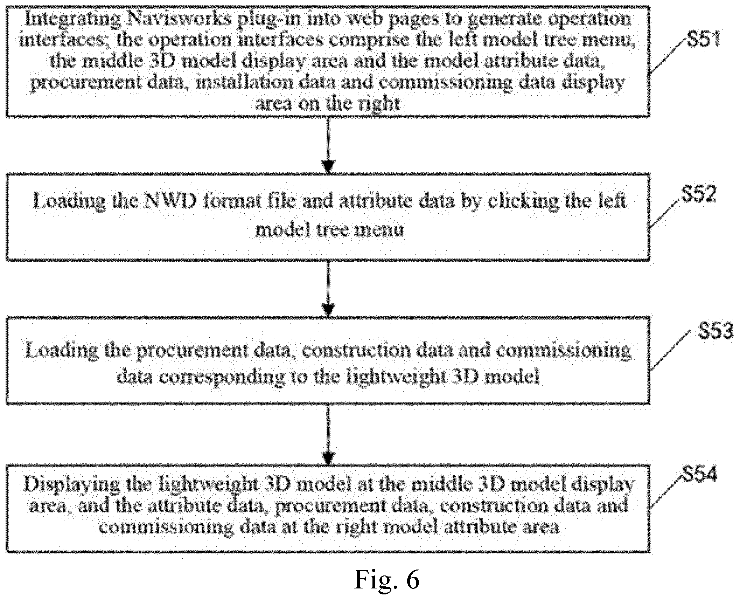

Further, as shown in FIG. 6, the Step S5 comprises:
Step S51: integrating the Navisworks plug-in into web pages to generate the operation interface, which comprises the left model tree menu, the middle 3D model display area, and the attribute data, procurement data, installation data, and commissioning data display area on the right; specifically, the Navisworks COM component can be used to realize the lightweight view of the module model on the web pages; the model interaction function provided by COS component is relatively simple, but it can meet the basic model browsing; by facilitating the import of PDMS model and exporting the model file in RVM format by PDMS, it only needs to convert the NWD file to display in COM component, and does not need special model processing, which can realize the rapid display of lightweight 3D module model;
Step S52: loading the NWD format files and attribute data by clicking the left model tree menu;
Step S53: loading the procurement data, construction data and commissioning data corresponding to the lightweight 3D module model, and such data can be captured from the design, procurement and construction segments through the data capture interface;
Step S54: displaying the lightweight 3D module model at the middle 3D model display area, and the attribute data, procurement data, construction data and commissioning data at the right model attribute area.

It should be noted that the values of the attribute data, procurement data, construction data and commissioning data are all single values, which are directly displayed in the form of "key-value pair". When the attribute is a file list, the basic data of the relevant file will be displayed by clicking "Details", and the relevant file will be opened for view of the content by clicking the file name. When the attribute is a single file, the file can be opened directly in the way of hyperlink.

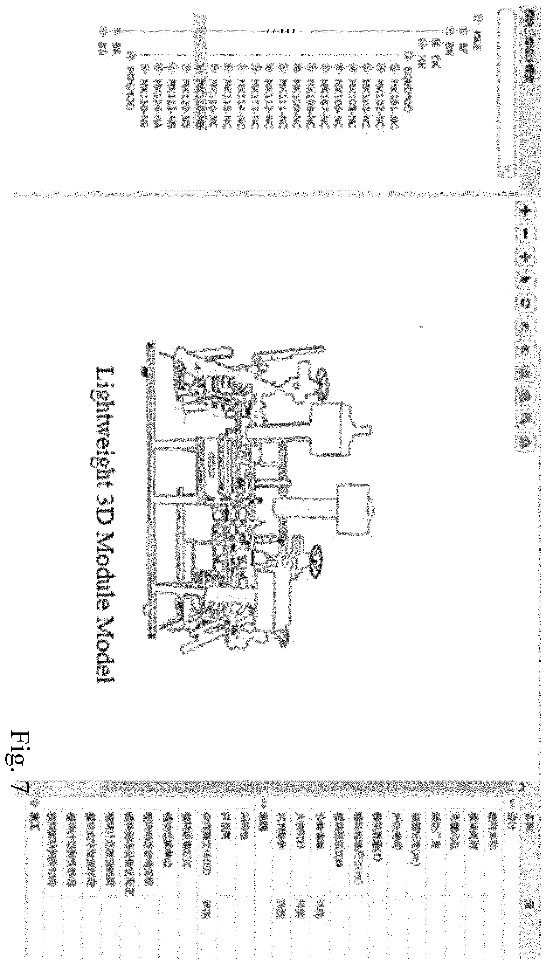

Specifically, as shown in FIG. 7, the operating interface comprises the left model tree menu, the middle 3D model display area, and the right display area of model attribute data, procurement data, installation data, commissioning data; of which, in accordance with the requirements for 3D platform model level management and module classification, the one-to-one correspondence of the tree-shaped module hierarchy structure, tree structure and the storage structure of database is realized; necessary module attribute data is displayed according to the design, procurement, construction classifications, the module attribute data is captured from the design, procurement, construction segments by data capture interface, and the corresponding display method is adopted depending on the type of attribute value; and the operating interface also comprises model operation toolbars, used for adding, remove, translation, selecting, scaling, free rotating, and concealing functions.

The dynamic display is specifically that: when the tree-shaped node in the left model tree menu is selected first, the middle 3D model display area will scale the selected node to the proper size, and the right attribute will change dynamically; when the 3D model is selected, the left model tree menu will locate to the node of the selected model automatically, the right model attribute data display area will display the attributes of the selected model automatically. The model attributes comprise the design attribute data, procurement data, construction data and commissioning data.

At the same time, the model tree menu on the left of the operation interface is a model hierarchical tree menu built according to the file storage structure of the lightweight model file. Loading, removing, hiding and other operations of the model at this level can be carried out by selecting a node in the tree node and clicking the menu on the toolbar.

### Embodiment 2

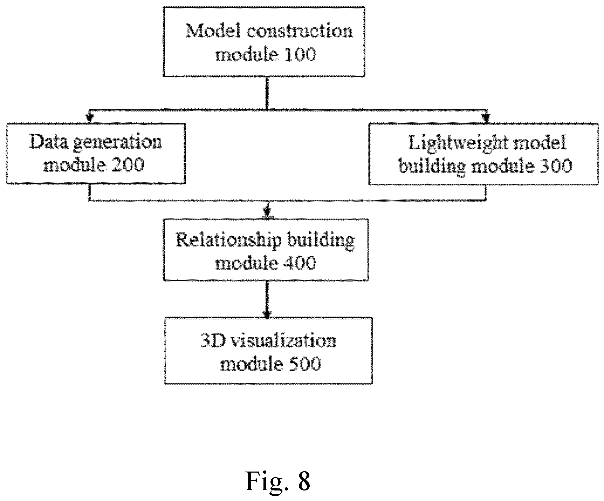

The present invention also provides a 3D model application system for modular construction of nuclear power engineering, as shown in FIG. 8. The system comprises:
the model construction module 100 which is used for establishing the modular 3D model for nuclear power stations through the 3D Plant Design Management System; when the modular 3D model for nuclear power stations is designed by PDMS, the designed module items comprise the design of mechanical module and structural module; specifically, the mechanical module comprises: equipment, gate, pipe, instrument, operating platform, steel frame and some other accessories; the structural module is the steel plate concrete structure component;
the data generation module 200 which is connected with the model construction module 100 for extracting technical documents from the modular 3D model for nuclear power stations, and generating procurement data, construction data and commissioning data according to the technical documents; the technical documents comprise the module technical documents, equipment and materials list, module calculation sheet, module design drawings, overall module implementation plan and scheme, procurement planning and technical documents, construction planning and technical documents, commissioning planning and non-module technical documents;
the lightweight model construction module 300 which is connected with the model construction module 100 for lightweight construction of modular 3D model for nuclear power stations and generating the lightweight 3D module model; the lightweight construction of modular 3D model for nuclear power stations can reduce the size of the modular 3D model and filter unnecessary attributes, so as to provide convenience for storage and display;
the relationship building module 400 which is connected with the data generation module 200 and lightweight model construction module 300 for establishing the corresponding relationship between the lightweight 3D module model and the procurement data and construction data; specifically, the lightweight 3D module model takes the module as the unit, and the procurement and construction also take the module as the business unit, the corresponding relationship between the lightweight 3D module model and the procurement and construction is established through the module name; for example, the module name MK119-NB can be loaded to view the model, and the procurement data and construction data corresponding to the module;
the 3D visualization module 500 which is connected with the relationship building module 400 for 3D visualization of the lightweight 3D module model, procurement data and construction data; through 3D visualization, it is convenient for operators to visually observe each lightweight 3D module model and its procurement and construction process, making the design, procurement, manufacturing and construction participants of nuclear power engineering be closely linked from upstream to downstream, and realizing the integrated display of advanced construction technology data of nuclear power engineering, so as to ensure the integration and sharing of upstream and downstream data and management data of nuclear power engineering construction.

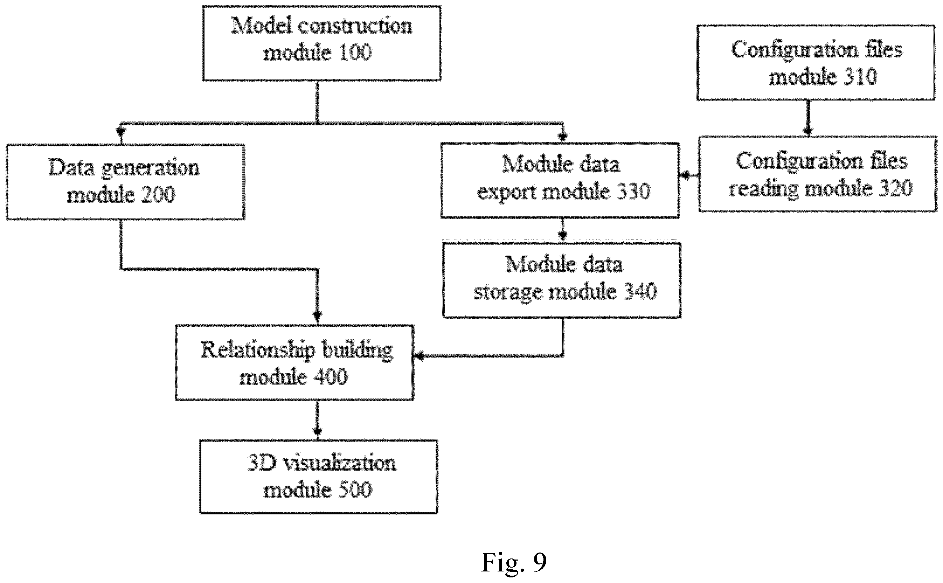

Further, as shown in FIG. 9, the lightweight model construction module 300 comprises:
the configuration files module 310 which is used for setting configuration files of the lightweight 3D module model; of which, the configuration files comprise the import frequency and scope, import way, import deployment, import execution and model organization; the import frequency can be once a week or once a day; the model import scope can be limited to a specific module, or a mechanical module or a structural module of a plant, or the module model of the whole plant, or the module model of the whole project; the import way can be set according to the module display requirements of the module comprehensive data management platform, and the module comprehensive data management platform can be imported regularly from the backend without user intervention. Import deployment refers to the deployment of the import program to the server where the model file is stored; according to the model import cycle, the WINDOWS task plan is set, the import program is called, and the module model is regularly updated to the module comprehensive data management platform. The model organization is stored in the specified database according to the division principle of plant, module type, module category, and others;
the configuration files reading module 320 which is connected with the configuration files module 310 for reading the lightweight 3D module model configuration files through the interface program of the 3D Plant Design Management System; the interface program can be C# structure program; and the 3D Plant Design Management System can be started by TTY (no interface login way), which is convenient and fast for login;
the module data export module 330 which is connected with the model construction module 100 and the configuration files reading module 320 for exporting the RVM file and attribute data of the modular 3D model for nuclear power stations;
the module data storage module 340 which is connected with the module data export module 330 for converting RVM files into NWD files through the interface program of the 3D Plant Design Management System, and exporting NWD format files and related attribute data to the database; the database has a specific storage structure, which is divided by specific plants, model types and module categories; there are modules, sub-modules and item categories under each module category; specifically, sub-modules and item categories are set with attribute files; through this storage structure, it can be guaranteed to match with the modular 3D model of nuclear power engineering, with modules as the unit.

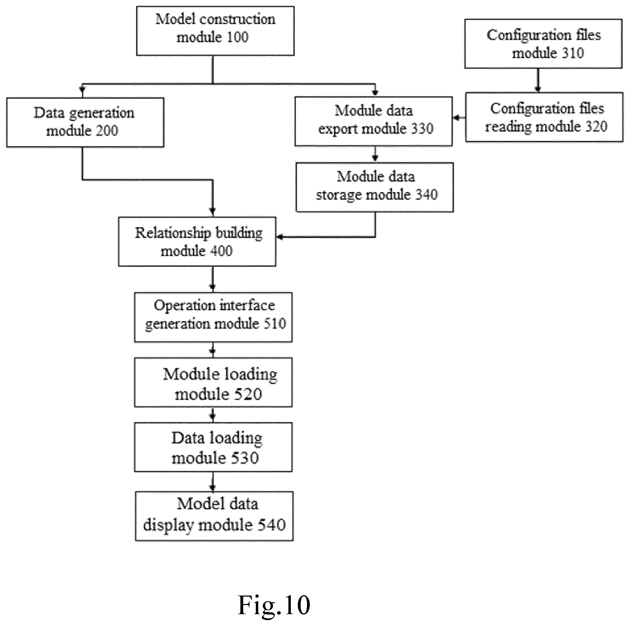

Further, as shown in FIG. 10, the 3D visualization module 500 comprises:
the operation interface generation module 510 which is connected with the relationship building module 400 for integrating Navisworks plug-in into web pages to generate operation interfaces; the operation interfaces comprise the left model tree menu, the middle 3D model display area and the attribute data, procurement data, installation data and commissioning data display area on the right; specifically, the Navisworks COM component can be used to realize the lightweight view of the module model on the web pages; the model interaction function provided by COS component is relatively simple; however, it can meet the basic model browsing; by facilitating the import of PDMS model and exporting the model file in RVM format by PDMS, it only needs to convert the NWD file to display in COM component, and does not need special model processing, which can realize the rapid display of the lightweight 3D module model;
the model loading module 520 which is connected with the operation interface generation module 510 for loading NWD format files and attribute data by clicking the left model tree menu;
the data loading module 530 which is connected with the model loading module 520 for loading the procurement data, construction data and commissioning data corresponding to the lightweight 3D module model; the procurement data, construction data and commissioning data can be captured from the design, procurement and construction segments by the data capture interface;
the model data display module 540 which is connected with the data loading module 530 for display of the lightweight 3D module model at the middle 3D model display area, and the attribute data, procurement data, construction data and commissioning data at the right model attribute area; it should be noted that the values of the attribute data, procurement data, construction data and commissioning data are all single values, which are directly displayed in the form of "key-value pair"; when the attribute is a file list, the basic data of the relevant file will be displayed by clicking "Details", and the relevant file will be opened for view of the content by clicking the file name; when the attribute is a single file, the file can be opened directly in the way of hyperlink.

The serial numbers of the above embodiments are only for describing the technical scheme, not representing the advantages and disadvantages of the embodiments.

In conclusion, the present invention provides a 3D model application method and system for modular construction of nuclear power engineering. By taking the 3D model as the core, and the module construction approach as the index, the design, procurement, construction participants of nuclear power engineering become closely linked from upstream to downstream, the integrated display of advanced construction technology data of nuclear power engineering is realized, and the unified and shared data of upstream and downstream construction and management of nuclear power engineering, as well as the rapid response processing of interfaces are ensured. In addition, the whole process and full range of fine and dynamic management for special process of nuclear power design modularity are realized through the screening, extraction and integration of the activity process data of module design, procurement, construction, commissioning, and other business segments, and the integration of 3D model, business process and operation plan presentation technologies of modules. The data integration concept of the present invention may be used widely. The present invention provides the data integration scheme to not only the nuclear power modular construction field, but also the design and construction field relating to multiple specialties coordination work from upstream to downstream. At the same time, the present invention puts forward the 3D model data visualization method for nuclear power modular construction technology, realizing the comprehensive data display combining with the advanced modular construction method, and creating the comprehensive management concept integrating visual management, fine management and intelligent management as a whole of the modular construction technology.

The above descriptions are the preferred embodiments of the present invention, and the present invention is not limited by the foregoing embodiments. Various changes, equivalent replacements and improvements of the present invention can further be made without departing from the spirit and scope of the present invention, and these changes, equivalent replacements and improvements shall fall within the claimed protection scope of the present invention.

## Claims

1. A 3D model application method for modular construction of nuclear power engineering, comprising the following steps:
establishing a plurality of modular 3D models for nuclear power stations;
extracting each technical document from each modular 3D model for nuclear power stations, and generating the procurement data, construction data and commissioning data of each modular 3D model for nuclear power stations according to the technical document;
performing lightweight construction of a plurality of modular 3D models for nuclear power stations and generating of a plurality of lightweight 3D module models;
building the corresponding relationship between a plurality of lightweight 3D module models and the procurement data and construction data and commissioning data;
carrying out 3D visualization for a plurality of lightweight 3D module models, the procurement data, construction data and commissioning data.

2. The 3D model application method according to Claim 1, **characterized in that** the lightweight construction of a plurality of modular 3D models for nuclear power stations and the generation of a plurality of lightweight 3D module models comprise:
setting the configuration files of the lightweight 3D module model;
reading the configuration files of the lightweight 3D module model;
exporting the RVM file and attribute data of each modular 3D model for nuclear power stations;
converting RVM files into NWD files, and exporting the NWD file and related attribute data to the database.

3. The 3D model application method according to Claim 2, **characterized in that** the configuration files of the lightweight 3D module model comprise the import frequency and scope, import way, import deployment, import execution and model organization.

4. The 3D model application method according to Claim 3, **characterized in that** the database has a specific storage structure.

5. The 3D model application method according to Claim 4, **characterized in that** the 3D visualization for the lightweight 3D module models, procurement data and construction data comprises:
integrating the Navisworks plug-in integrated into web pages to generate the operation interface, which comprise the model tree menu on the left, the middle 3D model display area, and the attribute data, procurement data, installation data, and commissioning data display area on the right;
clicking the left model tree menu to load the NWD format files and attribute data of the lightweight 3D module model;
loading the procurement data, construction data and commissioning data corresponding to the lightweight 3D module model;
displaying the lightweight 3D module model at the middle 3D model display area, and the attribute data, procurement data, construction data and commissioning data at the right model attribute area.

6. A 3D model application system for modular construction of nuclear power engineering comprising:
the model construction module which is used for building a plurality of modular 3D models for nuclear power stations;
the data generation module which is connected with the model construction module, and used for extracting each technical document from a plurality of modular 3D models for nuclear power stations, and generating procurement data and construction data according to the technical document;
the lightweight model construction module which is connected with the model construction module, and used for lightweight construction of modular 3D model for nuclear power stations and generating lightweight 3D module models;
the relationship building module which is connected with the data generation module and lightweight model construction module, and used for establishing the corresponding relationship between a plurality of lightweight 3D module models and the procurement data and construction data;
the 3D visualization module which is connected with the relationship building module, and used for realizing 3D visualization of the lightweight 3D module model, procurement data and construction data.

7. The 3D model application system according to Claim 6, **characterized in that** the lightweight model construction module comprises:
the configuration files module which is used for setting configuration files of the lightweight 3D module models;
the configuration files reading module which is connected with the configuration files module, and used for reading the lightweight 3D module model configuration files through the interface program of the 3D Plant Design Management System;
the module data export module which is connected with the model construction module and the configuration files reading module, and used for exporting the RVM file and attribute data of the modular 3D model for nuclear power stations;
the module data storage module which is connected with the module data export module, and used for converting RVM files into NWD files through the interface program of the 3D Plant Design Management System, and exporting NWD files and the related attribute data to the database.

8. The 3D model application system according to Claim 7, **characterized in that** the lightweight 3D module model configuration files comprise the import frequency and scope, import method, import deployment, import execution and model organization.

9. The 3D model application system according to Claim 8, **characterized in that** the database has a specific storage structure.

10. The 3D model application system according to Claim 9, **characterized in that** the 3D visualization module comprises:
the operation interface generation module which is connected with the relationship building module and used for integrating the Navisworks plug-in into a web page to generate the operation interface; the operation interface comprises the model tree menu on the left, the 3D model display area in the middle, and the model attribute, procurement, construction and commissioning display area on the right;
the model loading module which is connected with the operation interface generation module, and used for loading NWD format files and attribute data of the lightweight 3D module models by clicking the left model tree menu;
the data loading module which is connected with the model loading module for loading the procurement data, construction data and commissioning data corresponding to the lightweight 3D module model;
the model data display module which is connected with the data loading module, and used for the display of the lightweight 3D module model at the middle 3D model display area, and the attribute data, procurement data, construction data and commissioning data at the right model attribute area.
